# EUROPEAN PATENT SPECIFICATION

(11) **EP 3 670 552 B1**
(45) Date of publication and mention of the grant of the patent: **07.06.2023**
(21) Application number: 18214284.4
(22) Date of filing: 19.12.2018
(51) Int. Cl.: C08F 265/06, C08F 2/22, C09D 151/00, C08F 265/02, C09D 11/107, D06M 15/263, D06N 3/04

(54) **POLYMODAL AND ALKALI SOLUBLE RESIN SUPPORTED EMULSION POLYMERS**
POLYMODALE UND VON ALKALILÖSLICHEM HARZ GESTÜTZTE EMULSIONSPOLYMERE
POLYMÈRES D'ÉMULSION SUPPORTÉS PAR RÉSINE POLYMODALE ET SOLUBLE DANS DES ALCALIS

(43) Date of publication of application: 24.06.2020
(73) Proprietor: Organik Kimya Sanayi Ve Tic. A.S., 34075 Istanbul (TR)
(72) Inventor: KAPLAN, Mahir, 34075 Istanbul (TR); GUILLERMO PEREZ, Lorenzo, 34075 Istanbul (TR); ISA, Akyurt, 34075 Istanbul (TR); KASGOZ, Ahmet, 34075 Istamnbul (TR); ARSLAN, Fatma, 34075 Istanbul (TR)
(74) Representative: Müller-Boré & Partner Patentanwälte PartG mbB

(56) References cited:
- US-A- 5 081 166
- US-B1- 6 258 888
- Massimo Bandiera, Roelof Balk, Maria.J.Barandiaran: "One-Pot Synthesis of Waterborne Polymeric Dispersions Stabilized with Alkali-Soluble Resins", Polymers 2018, vol. 10(1) 18 January 2018 (2018-01-18), XP055593509, DOI: 10.3390/polym10010088 Retrieved from the Internet: URL:https://www.ncbi.nlm.nih.gov/pmc/artic les/PMC6415037/ [retrieved on 2019-06-03]

## Description

The present invention relates to an alkali soluble resin supported emulsion polymer composition having a bimodal or a polymodal particle size distribution with high solid content and to alkali soluble resins suitable for producing these polymers. It also relates to a multistage process for producing such an emulsion polymer and to the use of this polymer in applications especially where fast drying is desired. Accordingly, the resulting emulsion polymers can be used in film forming and coating compositions, for instance in making paint compositions having rapid drying times.

Emulsion polymerization is a well-known process for producing water based acrylic emulsions. Due to the increasing strictness of environmental regulations the importance of water-based emulsion polymers is increasing every day. These are dispersions of polymer particles in an aqueous medium and are used in a wide variety of applications such as adhesives, paints, coatings, paper coatings, paper impregnations, textile coatings, wood coatings, construction and building materials such as caulks and sealants, waterproofing roof coatings, cement additives and etc. The importance of emulsion polymerization process has grown significantly since the second half of the 20th century due to a wide variety of applications of water-based latexes. Additionally, the environmental regulations and awareness of the consumers have led to the replacement of solvent based polymers with water-based emulsions. Unlike solution polymers, emulsion polymers are produced in a heterogeneous, 2 phase system. Emulsion polymerization is a type of free radical polymerization process which most of the time starts with an emulsion incorporating water, at least one monomer and a surfactant. The resulting polymers produced in such a way are actually polymer particles dispersed in the water phase. In this complicated process surfactants are of paramount importance in order to stabilise the polymer particles, both during and after polymerization. During the polymerization process, surfactants provide sites for particle nucleation, controls the particle size and provides colloidal stability as the particles are formed. Thus, besides solubilizing hydrophobic monomers, surfactants in conventional emulsion polymerization process have various functions such as affecting the number and size of the emulsion particles formed, providing stability, as particles continue to grow in the dispersion and during post-polymerization processing. Examples of typical conventional surfactants generally used in emulsion polymerization are anionic surfactants such as fatty acid soaps, alkyl carboxylates, alkyl sulfates and alkyl sulfonates, non-ionic surfactants such as ethoxylated alkylphenol or fatty acids and cationic surfactants such as amines, nitriles and etc.

The advantages of using surfactants as put forward do not always eliminate the disadvantages for using them, especially when the final emulsion polymers are used in film forming compositions, for instance as coatings. One disadvantage stems from the high water sensitivity of surfactants since the films formed from the emulsion polymers containing them would have poor water resistance. Moreover, another problem can result from the tendency of surfactant molecules to migrate to the surface or to the substrate, often resulting with unwanted effects such as loss of gloss, cloudiness at the surface and/or loss of adhesion. They may also act as plasticizer which would cause reduced hardness of the polymer film. Poor adhesion and slow film formation are other problems associated with the surfactants in the composition.

In order to overcome these problems several methods have been developed. First method is the surfactant free emulsion polymerization. In the second method reactive surfactants are employed, which substantially improves the performance of the polymers because surfactants have the capacity of reacting with the monomer and so are fixed on the surface of the particle. Although technical and commercial success to some extent have been achieved with this method, economic considerations prevent producers to completely replace the conventional surfactants. Additionally, it is hard to convert all these polymerizable surfactants and the amount of surfactants that are not converted will act in a very similar way to conventional surfactants and so they will effect the application properties and the characteristics of the film forming compositions.

According to the third method polymeric surfactants are used as the stabilizing agents in emulsion polymerization process. These surfactants typically have a lower molecular weight in a range between 300 to 50,000 Daltons. These polymeric surfactants may be water soluble, alkali soluble or acid soluble and they are used for the same function as conventional surfactants in emulsion polymerization and besides provide additional performance properties which are not expected or not as good when conventional surfactants are employed. These additional properties may be gloss development, flow, levelling control, dry time control and improved resistance properties such as water resistance.

Alkali soluble resins (ASRs) are a specific type of polymeric surfactants which have both hydrophobic moieties and carboxylic acid functional groups. It is already known how to produce alkali soluble resins (ASRs) and alkali soluble resin (ASR) supported polymers by emulsion polymerization process. Actually, utilizing macromolecules as surfactants in conventional emulsion polymerization is widely used for producing water-based latexes with improved colloidal properties. This type of an emulsion polymerization process is also referred to as supported emulsion polymerization wherein alkali soluble resins are the support resins, according to this terminology. The support resins are used in addition to or completely replacing conventional surfactants in order to colloidally stabilize the growing polymer particles in the emulsion. The polymeric support resins generally have a number average molecular weights in between the range of 300 to 50,000 Daltons and typically they are 300, 500, 1000, 2000, 3000 to 10,000 or 20,000. Although they may differ in a wide range based on the intended use, overall their number average molecular weights should be lower than 50,000.

The presence of ASRs in the composition alters the film formation process resulting with a variety of properties in coating compositions comprising emulsion polymers produced with alkali soluble resins. Conventional surfactants are mainly used for stabilization of emulsion polymers. This can also be achieved by alkali soluble resins which provide electrosteric stabilization to the latex particles so that the amount of conventional surfactants can be decreased or they can even be completely replaced. The applications of alkali soluble resins have been possible in a variety of different fields such as removable protective coatings, wood coatings, pressure sensitive adhesives, waterbased graphic arts products, binders for ink applications, leather finishes, paper coatings and construction materials.

EP 0 816 402 discloses surfactant-free aqueous polymer dispersions (P) which contain neutralised polymer (A) containing acid groups. These polymer dispersions are prepared in water, by radical polymerization of ethylenic unsaturated compounds (A1) containing carboxyl groups and further carboxyl group-free ethylenic unsaturated compounds (A2) without the addition of low molecular weight surfactants.

US 4,151,143 discloses a 2-stage method for preparing a surfactant free polymer emulsion product. In the first stage a mixture of polymerizable monomers is formed, then said mixture is polymerized, neutralized and a dispersion of the polymer in water is formed. In the second stage, a second mixture of polymerizable monomers is formed and it is combined with the polymer dispersion formed in the first stage and heated in order to effect polymerization.

WO2015116916 discloses a surfactant free composition comprising an aqueous emulsion of a styrene acrylic or acrylic support resin having acid functional repeat units and a polymer of a hydrophobic monomer.

EP2448983 discloses a polymerization process to copolymerize hydrophobic ethylenically unsaturated C4-C28 olefins with polar monomers such as acrylates. The polymerization is carried out in an aqueous medium where a polymeric support is used in order to stabilize the polymerization product.

WO 2004099261 discloses a process to prepare a polymer dispersion using a substantially surfactant free emulsion polymerization process, a polymer dispersion which is the outcome of this process and the use of said polymer dispersion in a variety of applications. Polymer dispersion according to the disclosure has a very small average particle size and a high solid content.

EP1448611 discloses a polymer composition free of organic solvents, produced in 2 stages wherein in the first stage a first polymer is produced comprising chain transfer agents prefarably alpha methyl styrene dimer. In the second stage first polymer is emulsion polymerized in the absence or the substantial absence of surfactants.

EP1030890 discloses polymeric compositions referred as support resins which may act as the primary emulsifying surfactant.

EP 0 525 977 A1 discloses a support polymer (emulsion binder) for traffic marking paints produced with styrene and acrylic acid monomers and have an acid value of between about 50 to 250. It also discloses a hydrophobic emulsion polymer comprised of acrylic ester monomers and optionally including styrene. It is mentioned that due to high solids and low water content, the waterborne traffic marking paint is fast drying.

US 6,258,888 B1 discloses an aqueous emulsion of an organic polymeric material comprising: (a) a hydrophobic polymer part having a poly-modal particles size distribution and a preferred Mw ≥ 100.000 g/mol up to 5.000.000g/mol and (b) an oligomer part bearing acid groups having a Mw of 500-60.000 g/mol, the oligomer part being capable of imparting reversibility to the polymeric material. It also discloses a method of preparing the emulsion either by in-situ formation of a) and b) or by blending previouly prepared a) and b) to impart the reversibility and the use of the aqueous polymer emulsion in fast drying aqueous inks and coatings.

As it can be seen in the above-mentioned prior art documents, although different methods are disclosed for making resin supported emulsion polymers, there is no prior art mainly focusing on the particle size distribution of the resulting ASR supported polymer, which can be important for a variety of properties, specifically for allowing an increased solid content of the emulsion polymer.

Typical emulsion polymers found in the market have solids content lower than 55% by weight. In fact, most of the time solid contents are even lower, -as it is well known in the art, when higher solids content is targeted in the emulsion polymerization process, the viscosity rises sharply as the solids content increases. High viscosity products are not only difficult to handle, they are also risky to produce, tending to generate gels and grit during processing, if not resulting in partial or total coagulation of the product. However, highly concentrated latexes have many advantages such as faster drying rates and lower shipping cost for the same amount of active content. Therefore, synthesis of latexes having high solids and low viscosity is a major source of interest in this field.

In the prior art, a number of processes can be found for the preparation of high solids polymer dispersions. Most of these are either based on very narrow and specific processing conditions or combinations of seed latexes that have to be produced and carefully controlled beforehand.

U.S. Pat. No. 4,424,298 describes a composition for polymer dispersions with high solids in which a very precise combination of surfactants is prescribed (at least one sulfosuccinate based surfactant together with a fatty alcohol ethoxylate and sulphated one).

EP-A 784060 relates to a process for preparing polymer dispersions having a high solids content of more than 67%, in which carboxyl-functional monomers are polymerized with further ethylenically unsaturated monomers in the presence of a surfactant and where further surfactant is added at a monomer conversion of from 40% to 60%.

U.S. Pat. No. 4,456,726 discloses highly concentrated, bimodal, aqueous synthetic resin dispersions by the emulsion polymerization of ethylenically unsaturated monomers, in the presence of emulsifiers and prescribes the use of two polymer latexes of different particle size to be included in the initial charge and the monomers are polymerized subsequently.

As it is disclosed in the above-mentioned prior art documents, it is already known how to produce emulsion polymers having high solid contents with a bimodal particle size distribution. Therefore, it is clear from the disclosures that increasing the solid content of polymers with alternative particle size distributions and producing resin supported emulsion polymers without using surfactants, are separately, already known in the prior art. However, in order to produce high solid polymers having bimodal particle size distribution, surfactants are employed in these prior art processes causing the above-mentioned problems associated with surfactants in the final applications. Moreover, although various ways of producing resin supported emulsion polymers are known as mentioned in the state of the art, the disadvantage of these methods of polymerization wherein alkali soluble resins are used instead of surfactants, is that it is very hard to produce these with a high solid content. Although there are some attempts to produce polymers having a high solid content by using alkali soluble resins, there is no prior art disclosing an emulsion polymer having a high solid content which is achieved by a bimodal or a polymodal particle size distribution wherein said emulsion polymer is produced by using alkali soluble resins instead of surfactants.

Actually, it is not an easy task to achieve a bimodal or in general a polymodal particle size distribution with resin supported emulsion polymers, since the use of surfactants is important to control the particle size distribution. It is therefore the object of the present invention to control particle size distribution of resin supported emulsion polymers and moreover provide a resin supported emulsion polymer composition having a polymodal, preferably a bimodal particle size distribution that is produced without adding any conventional surfactants. It is also another object of the present invention to provide emulsion polymers with high solid content which have an active content up to 60% and at the same time exhibit low viscosity. Active content in the context of the present invention means the actual amount of polymer generated by letting or forcing the water to evaporate.

This object has been achieved by a multistage polymerization process wherein in the first stage an acid group containing polymer and in the second stage a polymer with a polymodal, preferably a bimodal particle size distribution is produced using the acid group containing polymer of the first stage and without adding any conventional surfactants. The invention therefore relates to solutions or dispersions of the following water-based emulsion polymers:
i) at least one acid group containing polymer which is at least partially neutralized and is produced in the first stage by a certain amount of free radical polymerization of ethylenically unsaturated compounds containing carboxyl group, wherein the amount depends on the water solubility of the co-monomer(s) used besides the carboxyl containing monomer and the desired particle size distribution of emulsion polymers of (ii).
ii) an alkali soluble resin supported emulsion polymer having a polymodal, preferably a bimodal particle size distribution, preferably having a high solid content, prepared by emulsion polymerization of ethylenically unsaturated compounds in the presence of an aqueous solution or dispersion of at least partially neutralized alkali soluble resin of the first stage.

According to the multistage process of the present invention, in the first stage, a mixture of water and alkali soluble resin (ASR) or if two or more resins are produced a mixture of water and the different ASRs is obtained which may be present as an aqueous solution or a dispersion of at least partially neutralized alkali soluble resins, depending on the solubility properties. In the second stage, a mixture of at least one alkali soluble resin and at least one ASR supported polymer in the form of an aqueous dispersion is obtained.

The invention also relates to a multistage process for producing the above-mentioned alkali soluble resins and alkali soluble resin supported emulsion polymers.

In accordance with the object, it has surprisingly been found out that the amount of carboxylic acid used while synthesizing the alkali soluble resin, has an influence on the particle size distribution of the resin supported emulsion polymer produced in the second stage. This finding has been used according to the invention in order to produce a polymer composition with a polymodal, preferably a bimodal particle size distribution without adding any conventional surfactants and instead using alkali soluble resins. Therefore, it has been possible to reach higher solid contents with respect to prior art resin supported polymers, at still low viscosities. It has also surprisingly been found out that when the polymer composition of the present invention is used as a binder in paint formulations, applied paint has a faster drying rate - not just as a result of high solid composition or not just as a result of the surfactant free composition. It is a finding of the present invention that, when the resin supported emulsion polymer having a high solid content produced according to the present invention, is used in suitable applications, the drying rate is faster compared to conventional high solid emulsion polymers or compared to surfactant free emulsion polymers, when taken alone. Surprisingly, the rate of drying is even more than the sum of the drying rates resulting from being surfactant free and resulting from having a high solid content, pointing out to a synergistic effect between these 2 characteristics. Consequently, it is an aspect of the present invention also to improve fast drying by the combination of having a high solid content and being an alkali soluble resin supported emulsion polymer, produced without addition of conventional surfactants. Besides the paint (coating) formulations the suitable applications for the novel high solid alkali soluble resin supported emulsion polymers may be, textile and ink formulations. They can also be used in a variety of applications such as adhesives, and construction materials

### Detailed description of the invention

Amphihilic polymers composed of both hydrophobic and hydrophilic groups, stabilise the polymer particles as a result of the hydrophobic interactions between its molecules and form sites like micelles. According to the theory of stabilisation, these structures that have dissolving parts in alkali phase form steric barriers around the polymer particles. In order to prevent the desorption of molecules, stabilising structures that are fixed on the surface of particles are present in the stabilising chain.

These amphiphilic core-shell polymers are generally synthesized by emulsion polymerization using alkali soluble resins. Alkali soluble resins are copolymers obtained from monomers having hydrophilic groups such as carboxylic acid or acid anhydride and some hydrophobic monomers. According to 2 staged production process of amphiphilic core shell polymers, firstly the alkali soluble resins are dissolved in alkali solutions and micelle like aggregates are formed once the concentration is more than critical aggregate concentration. Following this, monomers are polymerized inside the aggregates in order to form core shell polymers. Alkali soluble resins are used in high amounts in order to maintain colloidal stability in emulsion polymerization. Therefore, they act like a hydrophilic shell having a sufficient thickness, surrounding the outer surface of the core polymers.

There are 2 different alkali soluble resin types based on monomers used for producing them. First type includes the random copolymers of carboxylic acids such as acrylic acid or methacrylic acid and hydrophobic monomers such as styrene and butyl acrylate. These copolymers may be used as polymeric emulsifiers in order to prepare latexes having colloidal stability. The other type is styrene-maleic anhydride (SMA) copolymer resins.

The alkali soluble resins of the present invention are produced in order to have a solid content between the range 20 to 35%. Preferably, the solid content is between 23 to 28%, most preferably 25 to 27%. The solid contents of the ASRs used in the preferred embodiments of the present invention have a solid content of about 26,5%.

According to the present invention, it has been possible to provide a method for producing an alkali soluble resin supported polymer by using emulsion polymerization process, wherein the particle size distribution is surprisingly controlled over a wide range. This method is utilized mainly for producing alkali soluble resin supported emulsion polymers that allow for a polymodal or preferably a bimodal particle size distribution and consequently a high solid content in the resulting emulsion polymer. Thus, according to the method of the present invention it has been possible to produce a high solid content alkali soluble resin supported emulsion polymer having a polymodal, preferably a bimodal particle size distribution.

It has also surprisingly been found out that the novel emulsion polymer dispersion produced according to the method of the present invention can be used for the manufacture of a coating material that has rapid drying times, improved water resistance, gloss development, levelling control and freeze thaw stability.

The present invention also relates to a method to prepare the alkali soluble resin supported emulsion polymer in 2 stages wherein,
i) In the first stage, a carboxyl group containing polymer (alkali soluble resin) is produced by emulsion polymerization of stage 1 monomers, in order to be used as the support material in the second stage. The polymer is at least partially dissolved in water by the neutralizing agent.
ii) In the second stage, a blend of partially water soluble and/or partially water insoluble monomers and the alkali soluble resins produced in the first stage, are added to the reaction medium together with a free radical initiator. The polymerization reaction starts and the stage 2 monomers polymerize in the presence of alkali soluble resins which results in grafting and the formation of a very stable emulsion although no conventional surfactants have been added into the reaction medium.

In stage 1 of the process, a mixture of monomers comprising about 1-25%, preferably 3-15% and most preferably 4-12% by weight of at least one polymerizable carboxylic acid and at least one other copolymerizable monomer are used. (percentages are based on the total amount of first stage monomers). For introducing the carboxylic acid groups / carboxylic functionality to the alkali soluble resins it is possible to use ethylenically unsaturated monocarboxylic and/or polycarboxylic acids, preferably mono- and dicarboxylic acids or mixtures thereof. As unsaturated monocarboxylic acids acrylic acid, methacrylic acid, or crotonic acid and as unsaturated dicarboxylic acids, maleic acid, itaconic acid, mesaconic acid, fumaric acid, methylenemalonic acid, citraconic acid may be used either individually or in a mixture of one or more of these. Based on the intended application, it is possible to arrange a combination of one or more of the carboxylic acids from the list. For the preferred embodiments of the present invention methacrylic acid is selected. The monomers of this group can be used in the copolymerization in the form of the free acid or in partially or completely neutralized with alkali metal bases or ammonium bases.

All radically polymerizable ethylenically unsaturated compounds not containing carboxyl groups are suitable to use either individually or as a mixture of 2 or more monomers, as the comonomer(s) besides the carboxyl group containing monomers. Suitable comonomer(s) may be one or more of C1-C8 alkyl acrylates and/or alkyl methacrylates, C2-C4 hydroxyalkyl esters of a carboxylic acid and/or (meth)acrylamide Preferably a suitable comonomer may be one or more of acrylic acid esters, such as methyl, ethyl, propyl, butyl or 2-ethylhexyl acrylates or methacrylates, 2-hydroxyethyl acrylate or methacrylate, 2-hydroxypropyl acrylate or methacrylate and ethyl hexyl acrylate. Styrene, vinyl toluene or acrylamide may be used together with or instead of the acrylic esters in the monomer mixture. Most preferably, methyl methacrylate, ethyl acrylate, 2-ethylhexyl acrylate, butyl acrylate, styrene, acrylonitrile is used either individually or as a mixture of 2 or more monomers, as stage 1 co-monomer(s).

According to a preferred embodiment of the present invention, stage 1 monomer mixture comprises 4-12% by weight of methacrylic acid as the carboxy functional monomer and about 13% by weight of ethyl acrylate together with 75-83% by weight of methyl methacrylate as the co-monomers. Based on the required Tg value of the intended application the ethyl acrylate amount may be adjusted in a range of 5-20%, by weight.

According to another preferred embodiment of the present invention, stage 1 monomer mixture comprises 4-12% by weight of methacrylic acid as the carboxy functional monomer and about 13% by weight of styrene together with 75-83% by weight of methyl methacrylate as the co-monomers. Based on the required Tg value of the intended application the styrene amount may be adjusted in a range of 5-20%, by weight.

According to a different embodiment of the present invention, stage 1 monomer mixture comprises about 4-12% by weight of methacrylic acid as the carboxy functional monomer and about 13% by weight of 2-ethylhexyl acrylate or acrylonitrile or butyl acrylate together with about 75-83% by weight of methyl methacrylate as the co-monomers. Based on the required Tg value of the intended application the 2-ethylhexyl acrylate or acrylonitrile or butyl acrylate amount may be changed in a range of 5-20%, by weight.

The amount of comonomer(s) is/are 75 to 99%, preferably 85 to 97% and most preferably 88 to 96% by weight based on the total weight of the monomers of alkali soluble resins of the first stage.

Optionally it is also possible to add, up to 10% of other functional monomers in order to incorporate specific properties to alkali soluble resins and thus to the ASR supported polymers.

Table 1 shows the monomer compositions of different types of alkali soluble resins which have been produced in the first stage and will be used in the second stage, according to the present invention. The alkali soluble resins with a specific monomer composition will be referred throughout the present application with the letter assigned to it in the "ASR type" column.

**TABLE 1 Monomer Ratios Used in Alkali Soluble Resin Preparation (by weight of monomer with respect to total monomer amount of the first stage)**

| Trial No | ASR Type | EA (%) | STY (%) | EHA (%) | ACN (%) | BA (%) | MAA (%) | MMA (%) |
|---|---|---|---|---|---|---|---|---|
| 1 | A | 13.0 | - | - | - | - | 4.0 | 83.0 |
| 2 | B | 13.0 | - | - | - | - | 4.5 | 82.5 |
| 3 | C | 13.0 | - | - | - | - | 5.0 | 82.0 |
| 4 | D | 13.0 | - | - | - | - | 5.5 | 81.5 |
| 5 | E | 13.0 | - | - | - | - | 6.0 | 81.0 |
| 6 | F | 13.0 | - | - | - | - | 7.0 | 80.0 |
| 7 | G | 13.0 | - | - | - | - | 8.0 | 79.0 |
| 8 | H | 13.0 | - | - | - | - | 10.0 | 77.0 |
| 9 | I | 13.0 | - | - | - | - | 12.0 | 75.0 |
| 10 | K | - | 13.0 | - | - | - | 4.0 | 83.0 |
| 11 | L | - | 13.0 | - | - | - | 5.0 | 82.0 |
| 12 | M | - | 13.0 | - | - | - | 6.0 | 81.0 |
| 13 | N | - | 13.0 | | - | - | 7.0 | 80.0 |
| 14 | O | - | 13.0 | - | - | - | 8.0 | 79.0 |
| 15 | P | - | 13.0 | - | - | - | 10.0 | 77.0 |
| 16 | Q | - | 13.0 | - | - | - | 12.0 | 75.0 |
| 17 | S | - | - | 13.0 | - | - | 7.0 | 80.0 |
| 18 | T | - | - | - | 13.0 | - | 7.0 | 80.0 |
| 19 | U | - | - | - | - | 13.0 | 7.0 | 80.0 |

The alkali soluble resins produced in the first stage and will be used in the second stage, according to the present invention have a number average molecular weight of from about 300 to 50.000 Dalton, preferably between 10.000 - 20.000 Dalton.

In stage 2 of the multistage process for producing ASR supported emulsion polymer, it appears to be important to replace conventional surfactants with support resins, so that the surfactant free composition contributes to the fast drying in suitable applications. When polymerizing without the addition of conventional surfactants into the polymerization medium, care must be taken since it might become very difficult to control particle size distribution without conventional surfactants.

In stage 2 of the process, monomer mixture (stage 2 monomers) either does not contain any acid functional monomer or contains at most 5% of one or more of acid functional monomers, by weight based on the total weight of stage 2 monomers. Stage 2 monomers may be one or more of C1-C8 alkyl acrylates and/or alkyl methacrylates, C2-C4 hydroxyalkyl esters of a carboxylic acid and/or (meth)acrylamide. Preferably they may be one or more of methyl, ethyl, propyl and butyl (meth)acrylates, beta-hydroxyethyl and beta-hydroxypropyl (meth)acrylates, acrylamide and isobutoxymethyl acrylamide. Acrylonitrile or styrene may also be used either individually or be comprised in Stage 2 monomer mixture. The most preferred stage 2 monomers are styrene, butyl acrylate, methyl methacrylate which are used either individually or as a mixture of 2 or more, for the preparation of stage 2 monomer mixture.

Preferably the mixture of stage 2 monomers comprises 50-70% by weight of butyl acrylate and 30-50% by weight of methyl methacrylate. In another preferred embodiment of the present invention the mixture of stage 2 monomers comprises 50-70% by weight of butyl acrylate and 30-50% by weight of styrene. Table 2 shows the specific ratios of stage 2 monomers to produce Polymer 1 and Polymer 2.

**TABLE 2 Monomer Ratios Used in ASR Supported Polymer Preparation (by weight of monomer with respect to total monomer amount of the second stage)**

| Polymer | BA (%) | MMA (%) | STY (%) |
|---|---|---|---|
| 1 | 60 | 40 | - |
| 2 | 60 | - | 40 |

In stage 2 of the multistage process for producing an alkali soluble resin supported emulsion polymer having a polymodal or preferably a bimodal particle size distribution which comprises at least one monomer and a free radical initiator, the alkali soluble resins that are used as the support and/or stabilizer materials are present in an amount greater than 15 and up to 40 percent by weight based on the total amount of stage 2 monomers.

In stage 2, the alkali soluble resin supported emulsion polymers may be produced in the same reactor by continuing with the addition of stage 2 monomers or in a separate reactor by using the alkali soluble resins of the first stage produced beforehand. In the end an aqueous polymer emulsion is provided, as used herein an alkali soluble resin supported emulsion polymer.

Thus, an object of the present invention is to provide an alkali soluble resin supported emulsion polymer having a polymodal particle size distribution with still low viscosity and a high solid content.

This object is solved by the embodiments characterized in the claims.

Accordingly in an embodiment of the present invention, there is disclosed a multistage process for producing an alkali soluble resin supported emulsion polymer wherein the first stage comprises the steps of,
forming a mixture of first stage monomers comprising, from about 1 to 25% by weight of at least one carboxy functional monomer selected from the group comprising acrylic acid, methacrylic acid, crotonic acid, maleic acid, itaconic acid, mesaconic acid, fumaric acid, methylenemalonic acid, citraconic acid or mixtures thereof,
from about 75 to 99% by weight of one or more other ethylenically unsaturated monomers different from the carboxy functional monomer but capable of copolymerizing with the carboxy functional monomer, where percentages are based on the total amount of first stage monomers,
polymerizing said first stage monomer mixture in the presence of a polymerization catalyst, water and a chain transfer agent to form a polymer dispersion having a number average molecular weight lower than 50.000 Dalton.
neutralizing the polymer with a neutralizing agent to a pH value in between the range from 7,0 to 11,0 whereby the polymer dispersion becomes transparent or semitransparent, and the second stage comprises the steps of,
forming a mixture of second stage monomers comprising one or more of ethylenically unsaturated monomers,
polymerizing said second stage monomer mixture in the presence of a polymerization catalyst and the alkali soluble resin produced in the first stage, wherein the resulting alkali soluble resin supported emulsion polymer has a polymodal particle size distribution.

The monomers are selected for the alkali soluble resin in such proportion that the alkali soluble resin has carboxylic acid functionality. As a result of acid functionality, the alkali soluble resins may be dissolved in water through salt formation with an appropriate base, such as ammonia.

So according to the method of the present invention, first of all, an alkali soluble resin to be used as support and/or stabilizer in a surfactant free emulsion polymerization process is produced. Surprisingly, it has been found out that the amount of carboxylic acid used for producing the alkali soluble resin is crucial in determining the particle size distribution of the resin supported emulsion polymer and this critical amount changes based on the (water solubility of the) co-monomer(s) used with the monomer having carboxylic functionality. Actually, it is determined that the water solubility of the co-monomers directly effects the water solubility of alkali soluble resins and the solubility of alkali soluble resins play a role in the particle size distribution of ASR supported emulsion polymers. The particle size distribution of ASR supported emulsion polymers produced with same or similar MAA amounts but with different co-monomers, has changed based on the water solubility of the co-monomer. Thus, when a certain amount of acid determined based on the co-monomer(s), is used in order to produce the alkali soluble resin which will be used as the support material, a polymodal or preferably a bimodal particle size distribution may be achieved with the resulting ASR supported emulsion polymer. Said finding has been demonstrated with the experimental results of the present application.

In a preferred embodiment wherein ethyl acrylate is one of the co-monomers with methacrylic acid changing in an amount 4-12% by weight of total amount of stage 1 monomers and stage 2 monomer mixture comprises butyl acrylate (60%) and methyl methacrylate (40%), the average particle size of the resulting alkali soluble resin supported emulsion polymer produced in stage 2 is between 50 to 150 nanometers. In the same embodiment when methacrylic acid is used between 4-6% by weight, the average particle size is 90 to 140 nanometers and besides a bimodal particle size distribution is obtained wherein 10-20% by volume are large particles having a particle size between 250 to 500 nanometers and 80-90% by volume are small particles between 50 to 250 nanometers, preferably between 50 to 120 nanometers.

In another preferred embodiment wherein ethyl acrylate is one of the co-monomers with methacrylic acid changing in an amount 4-12% by weight of total amount of stage 1 monomers and stage 2 monomer mixture comprises butyl acrylate (60%) and styrene (40%), the average particle size of the resulting alkali soluble resin supported emulsion polymer produced in stage 2 is between 50 to 600 nanometers. In the same embodiment when the methacrylic acid amount is 4-6% by weight, the average particle size is between 400 to 600 nanometers and besides a bimodal particle size distribution is obtained wherein 40-65% by volume are large particles having a particle size between 600 to 900 nanometers and 35-60% by volume are small particles having a particle size between 50 to 150 nanometers, preferably between 80 to 120 nanometers. When the methacrylic acid amount is 6-12% by weight, the average particle size is between 50 to 120 nanometers and besides a bimodal particle size distribution is obtained wherein 10-40% by volume are large particles having a particle size between 150 to 300 nanometers and 60-90% by volume are small particles having a particle size between 30 to 150 nanometers, preferably between 40 to 70 nanometers.

In a different preferred embodiment wherein styrene is one of the co-monomers with methacrylic acid changing in an amount 4-12% by weight of total amount of stage 1 monomers and stage 2 monomer mixture comprises butyl acrylate (60%) and methyl methacrylate (40%), the average particle size of the resulting alkali soluble resin supported emulsion polymer produced in stage 2 is between 100 to 250 nanometers. In the same embodiment when the methacrylic acid amount is 7-12% by weight, the average particle size is between 50 to 200 nanometers and besides a bimodal particle size distribution is obtained wherein 25-40% by volume are large particles having a particle size between 200 to 400 nanometers and 60-75% by volume are small particles having a particle size between 30 to 70 nanometers, preferably between 40 to 60 nanometers.

In a different preferred embodiment wherein styrene is one of the co-monomers with methacrylic acid changing in an amount 4-12% by weight of total amount of stage 1 monomers and stage 2 monomer mixture comprises butyl acrylate and styrene, the average particle size of the resulting alkali soluble resin supported emulsion polymer produced in stage 2 is between 150 to 250 nanometers. In the same embodiment when the methacrylic acid amount is 8-12% by weight, the average particle size is between 150 to 200 nanometers and besides a bimodal particle size distribution is obtained wherein 20-55% by volume are large particles having a particle size between 200 to 700 nanometers and 45-80% are small particles having a particle size between 30 to 150 nanometers, preferably between 40 to 100 nanometers.

In another preferred embodiment of the present invention F type alkali soluble resins (ASR-F) are used in the second stage of the process and stage 2 monomer mixture comprises butyl acrylate (60%) and styrene (40%). When the water content of the process is adjusted in order to result with ASR supported polymers having solid contents in between 40 to 60%, the average particle size changes between 100 to 400 nanometers with a bimodal particle size distribution. The percentage of large particles is 20-50% by volume with a particle size in between 200 to 800 nanometers wherein the percentage of small particles is 50-80% with a particle size in between 50 to 200 nanometers. When the water content for this embodiment is adjusted in order to result with an ASR supported emulsion polymer having a solid content of about 43%, the average particle size is about 96 nanometers with a bimodal particle size distribution of 74% by volume smaller particles (55nm) and 26% by volume larger particles (212nm). When the water content for this embodiment is arranged in order to result with an ASR supported emulsion polymer having a solid content of about 53%, the average particle size is about 248 nanometers with a bimodal particle size distribution of 70% by volume smaller particles (132 nm) and 30% by volume larger particles (518 nm). Finally, when the water content is adjusted in order to result with an ASR supported emulsion polymer having a solid content of about 60%, the average particle size is about 378 nanometers with a bimodal particle size distribution of 60% by volume smaller particles (143 nm) and 40% by volume larger particles (730 nm).

The present invention as generally described will be described in terms of specific embodiments by reference to the following examples which represent the current invention.

### Stage 1 Alkali Soluble (Support) Resin Preparation

The components A (water), B (surfactant), C (buffer), D (initiator: ammonium persulphate; APS), E (monomer mixture) and F (aqueous NH₄OH) were prepared. The alkali soluble resins are prepared by adding components A, B and C to a reactor and then heating to a temperature of 80 °C under the low stream of inert N₂ gas. Also a part of components A, B and E were mixed together at another vessel in order to prepare component G. At 80 °C; 5% of component G was added to the reactor and stirred for 1 minute. Then a part of component D was added to the reactor to start the initial reaction. After the initial reaction, rest of item C, D and G were added to the reactor in a time period of 60 minutes. After the addition, the reactor content is kept at 90°C for 30 minutes and then cooled down to 80°C. Ammonia solution is slowly added and the reactor content is kept at 80°C for another 30 minutes. The white dispersion turns into a clear, low viscosity solution. It is cooled down to 40°C and discharged by filtering.

### Example 1

A monomer emulsion, comprising; 290 parts of deionized water, 14.3 parts of Rhodafac RS 710, 35.75 parts of n-DDM, 48.4 parts of Methacrylic acid (MAA), 563.2 parts of methyl methacrylate (MMA) and 16.02 parts of Ethyl acrylate (EA) was prepared. 50 parts of this monomer emulsion was set aside (pre-emulsion) and the rest was placed in a dosing funnel attached to one of the reactor's necks. 1320 parts of deionized water, 4.75 parts Rhodafac RS 710 and 1.54 parts of NaHCOs are added to a 3-necked flask equipped with a stirrer, thermometer and a reflux condenser. The flask is heated to 80 °C and the pre-emulsion is added. 1 parts of ammonium persulphate and 0.45 parts of NaHCOs dissolved in 38.4 parts of deionized water are introduced. Upon reaction of the pre-emulsion, the rest of the monomer emulsion is fed to the reactor for a period of 60 minutes, in parallel with 2.3 parts of ammonium persulphate and 1.05 parts of NaHCOs dissolved in 90 parts of deionized water. After the addition, the reactor is kept at 90°C for 30 minutes and then cooled down to 80°C. 121 parts of ammonia dissolved in 121 parts of deionized water are added to the flask in 30 min. The white dispersion turns into clear, low viscosity solution. It is cooled down to 40 °C and discharged by filtering. The final latex polymer has a solid content of 27.5%, pH 9-11, viscosity is < 100 cps (LVT 3/20).

Other examples, for the preparation of alkali soluble resins produced according to the method of the present invention are presented in TABLE 1. The variables such as monomers and the amounts are mentioned together with the ASR name assigned to the specific type of alkali soluble resins. In TABLE 3 detailed properties of the ASR types are presented. In the tables, EA represents ethyl acrylate, STY is styrene, EHA is 2-ethylhexyl acrylate, ACN is acrylonitrile and BA is butyl acrylate.

**TABLE 3 Alkali Soluble Resins**

| ASR | Solid 25±2% (Thr:26,5) | pH | Vis. (cps) | Tg theor. (°C) | Tg DSC (°C) | Free Monomer (ppm) | Molecular weight (Dalton) |
|---|---|---|---|---|---|---|---|
| A | 26,6 | 10,4 | 140 | 72,9 | 71,2 | 6 MMA; 0 MAA; 6,6 EA | 10.788 |
| B | 26,0 | 10,3 | 80 | 73,2 | 71,6 | 2,7 MMA; 0 MAA; 0 EA | 13.850 |
| C | 26,6 | 9,9 | 40 | 73,6 | 71,5 | 8,8 MMA; 9 MAA; 6,7EA | 19.676 |
| D | 26,1 | 10,3 | 110 | 74,0 | 73,4 | 4,9 MMA; 5,9 MAA; 0,7 EA | 16.650 |
| E | 25,7 | 10,2 | 180 | 74,3 | 73,3 | 0 MMA; 0,7 MAA; 3,6 EA | 18.285 |
| F | 26,0 | 10,1 | 100 | 75,0 | 74,1 | 11 MMA; 0 MAA; 6,9 EA | 10.856 |
| G | 26,4 | 10,0 | 200 | 75,8 | 73,8 | 2,5 MMA; 1,1 MAA; 0,7 EA | 12.245 |
| H | 26,6 | 9,7 | 100 | 77,2 | 75,5 | 3 MMA; 0,8 MAA; 9 EA | 17.689 |
| I | 26,9 | 9,6 | 255 | 78,6 | 77,0 | 14 MMA; 0,2 MAA; 6 EA | 11.060 |
| K | 26,0 | 10,3 | 10 | 85,9 | 85,0 | 3 MMA; 9 MAA; 0,6 STY | 10.179 |
| L | 26,0 | 10,1 | 25 | 86,6 | 85,2 | 2,4 MMA; 4,5 MAA; 0 STY | 11.936 |
| M | 26,1 | 10,0 | 40 | 87,3 | 88,0 | 1 MMA; 7 MAA; 6,6 STY | 14.545 |
| N | 26,8 | 9,9 | 20 | 88,0 | 87,8 | 0 MMA; 0,9 MAA; 0,6 STY | 14.141 |
| O | 26,0 | 10,1 | 15 | 88,7 | 87,1 | 11 MMA; 2,8 MAA; 4 STY | 18.090 |
| P | 26,2 | 9,9 | 20 | 90,2 | 88,6 | 2 MMA; 9 MAA; 0,6 STY | 19.889 |
| Q | 26,0 | 9,9 | 100 | 92 | 92 | 1,3 MMA; 4MAA; 0,7 STY | 16.400 |
| S | 26,6 | 9,9 | 200 | 68,8 | 67,3 | 4 MMA; 5 MAA; 0,2 EHA | 18.299 |
| T | 26,3 | 9,7 | 440 | 95,5 | 93,9 | 5 MMA; 0,9 MAA; 0,5 ACN | 18.699 |
| U | 26,4 | 9,8 | 180 | 71,4 | 69,5 | 0 MMA; 2 MAA; 0 BA | 16.950 |

### Resin Supported Emulsion Polymers Preparation

The components A (water), ASR (resin), C (monomer mixture: STY: BA, 40:60) and D (initiator: ammonium persulfate; APS) listed in table below were prepared by admixing components of each items. The resin supported emulsion polymers are prepared by adding components A and ASR to a reactor and heating to a temperature of 85 °C under a low stream of N₂. Also rest of the component ASR and component C were mixed together at another vessel (component E). At 80°C; 5 % of E was added to the reactor and stirred for 1 minute, then a part of component D is added to the reactor to start initial reaction. After initial reaction rest of item C and item D were added to the reactor in a period of 60 minutes. After the addition, the reactor is kept at 90°C for 30 minutes and then cooled down to 40°C and discharged by filtering.

**Example 1)** A monomer emulsion, consisting of; 113 parts of deionized water, 198 parts of F type Alkali soluble resin (Support resin- ASR-F), 100 parts of Methyl methacrylate MMA and 150 parts of Butyl acrylate BA was prepared. 30 parts of this monomer emulsion was set aside (pre-emulsion) and the rest was placed in a dosing funnel attached to one of the reactor's necks. 25 parts of deionized water and 198 parts of Alkali soluble resin (Support resin- ASR-F) are added to a 3-necked flask equipped with a stirrer, thermometer and a reflux condenser. The flask is heated to 80 °C and the pre-emulsion is added. 0.5 parts of ammonium persulphate dissolved in 16.6 parts of deionized water are introduced. Upon reaction of the pre-emulsion, the rest of the monomer emulsion is fed parallel to the reactor in a 60-minute period with 0,8 parts of ammonium persulphate dissolved in 25 parts of deionized water. After the addition, reactor is kept at 90°C for 30 minutes. Then cooled down to 40°C and discharged by filtering. The final latex polymer has a solid content of 42.5 %, pH 9-11, viscosity is < 100 cps (LVT 3/20).

### Other examples are as follows;

The components A (water), ASR (alkali soluble resin), C (stage 2 monomer mixture: MMA: BA, 40:60) and D (initiator: ammonium persulfate; APS) listed in table below were prepared. The resin supported emulsion polymers are prepared firstly by adding components A and ASR to a reactor and heating to a temperature of 85 °C under a low stream of inert N₂ gas. Also rest of the ASR and component C were mixed together at another vessel (component E). At 80°C; 5 % of component E was added to the reactor and stirred for 1 minute, then a part of component D is added to the reactor to start the initial reaction. After initial reaction rest of C and D were added to the reactor in a period of 60 minutes. After the addition, the reactor content is kept at 90°C for 30 minutes and then cooled down to 40°C and discharged by filtering.

The following tables show the particle size distribution of ASR supported polymers produced by varying the methacrylic acid amounts and comonomer types used in alkali soluble resins.

**TABLE 4 ASR Supported BA/MMA based (60:40) Polymers Produced by Using ASRs comprising EA and varying amounts of MAA**

| Trial No | Monomer ratio (60/40) | ASR name (% MAA) | Solid theoretic al | Solid (g/L) | pH | Vis. (cps) | Average Particle Size (nm) | Tg (°C) | Free Monomer (ppm) |
|---|---|---|---|---|---|---|---|---|---|
| 177 | BA/MMA | A(%4) | 42,5 | 42,4 | 9,8 | 210 | 140 | 11.9- 70.6 | 0.2MMA/ 0.01BA |
| 180 | BA/ MMA | B(%4,5) | 43,7 | 43,8 | 9,9 | 110 | 93(%86)/ 428(%14) | 12.7- 71.1 | 0.5MMA/ 0.01BA |
| | | | | | | | *Av.: 140* | | |
| 145 | BA/ MMA | C(%5) | 44,1 | 44 | 9,5 | 50 | 75(%85)/ 337(%15) | 12.8- 70.8 | 0.2MMA/ 0.11BA |
| | | | | | | | *Av.: 114* | | |
| 181 | BA/ MMA | D(%5,5) | 44 | 43,8 | 9,8 | 80 | 70(%86)/ 279(%14) | 9.7- 69.9 | 0.1MMA/ 0.15BA |
| | | | | | | | *Av.: 99* | | |
| 178 | BA/MMA | E(%6) | 43 | 42,8 | 9,8 | 130 | 62 | 11.1- 72.4 | 0.1MMA/ 0.1BA |
| 190 | BA/ MMA | F(%7) | 43,4 | 43,3 | 9,4 | 40 | 60 | 10.5- 73.5 | 0.1MMA/ 0BA |
| 179 | BA/ MMA | G(%8) | 43,1 | 43 | 9,9 | 150 | 57 | 10.8- 70.7 | 0.7MMA/ 0.2BA |
| 143 | BA/ MMA | H(%10) | 43,1 | 43,2 | 9,3 | 100 | 55 | 9.8- 72.2 | 0.9MMA/ 0.2BA |
| 164 | BA/ MMA | I(%12) | 43,8 | 43,6 | 9,3 | 8400 | 50 | 11- 76.8 | 0.6MMA/ 0.2BA |

**TABLE 5 ASR Supported BA/STY based (60:40) Polymers Produced by Using ASRs comprising EA and varying amounts of MAA**

| Trial No | Monomer ratio(60/40 ) | ASR (% MAA) | Solid theoret ical | Solid (g/L) | pH | Vis. (cps) | Average Particle Size (nm) | Tg (°C) | Free monomer (ppm) |
|---|---|---|---|---|---|---|---|---|---|
| 198 | BA / STY | A(%4) | 42,5 | 42,2 | 9,4 | 25 | 103(%37) /868(%63) | 10.8- 70.5 | 1.8BA/ 2.6 STY |
| | | | | | | | *Av.: 585* | | |
| 146 | BA / STY | C(%5) | 44,1 | 43,8 | 9,3 | 70 | 100(%55) /783(%45) | 8.7- 71.1 | 2.1BA/ 0.6STY |
| | | | | | | | *Av: 407* | | |
| 199 | BA / STY | E(%6) | 43 | 42,8 | 9,3 | 40 | 57(%64) /177(%36) | 8.2- 72.3 | 1.3BA/ 2.5STY |
| | | | | | | | *Av.: 100* | | |
| 191 | BA / STY | F(%7) | 43,4 | 43,3 | 9,2 | 50 | 55(%74) /212(%26) | 7.0- 80.1 | 0.8BA/ 3.6STY |
| | | | | | | | *Av.: 96* | | |
| 200 | BA / STY | G(%8) | 43,1 | 43,1 | 9,3 | 60 | 52(%72) /220(%28) | 8.2- 70.4 | 2.1BA/ 1.6STY |
| | | | | | | | *Av.: 99* | | |
| 144 | BA / STY | H(%10) | 43,1 | 42,9 | 9,1 | 85 | 49(%90) /253(%10) | 9.9- 72.7 | 1.7BA/ 0.8STY |
| | | | | | | | *Av.: 69* | | |
| 169 | BA / STY | I(%12) | 43,8 | 43,6 | 9,1 | 900 | 48 | 10.4- 76.8 | 1.8BA/ 0.9STY |

**TABLE 6 ASR Supported BA/MMA based (60:40) Polymers Produced by Using ASRs comprising STY and varying amounts of MAA**

| Trial No | Monom er (60/40) | ASR (% MAA) | Solid theore tical | Solid (g/L) | pH | Vis. (cps) | Average Particle Size (nm) | Tg (°C) | Free monomer (ppm) |
|---|---|---|---|---|---|---|---|---|---|
| 196 | BA/ MMA | K(%4) | 41,4 | 41,3 | 9,4 | 100 | 203 | 8.8- 85.1 | 1MMA /0BA |
| 186 | BA/ MMA | L(%5) | 43,2 | 43 | 9,7 | 110 | 171 | 9.7- 84.9 | 2MMA /5BA |
| 187 | BA/ MMA | M(%6) | 42,3 | 42 | 9,7 | 90 | 155 | 11- 85.8 | 4MMA /3BA |
| 133 | BA/ MMA | N(%7) | 43,5 | 43,4 | 9,5 | 60 | 375(%35)/ 52(%65) | 8.0- 86.1 | 0.25MMA /0.7 BA |
| | | | | | | | *Ort: 165* | | |
| 188 | BA/ MMA | O(%8) | 43,6 | 43,6 | 9,4 | 60 | 280(%31)/ 49(%69) | 11- 85.4 | 0.9MMA /0.19 BA |
| | | | | | | | *Ort: 120* | | |
| 189 | BA/ MMA | P(%10) | 42,7 | 42,5 | 9,6 | 180 | 240(%30)/ 55(%70) | 9.9-87 | 3.2MMA /1.8 BA |
| | | | | | | | *Ort: 110* | | |
| 192 | BA/ MMA | Q(%12) | 42,9 | 42,8 | 9,0 | 460 | 221(%30)/ 50(%70) | 8.4-90 | 4.2MMA /0.7 BA |
| | | | | | | | *Ort: 101* | | |

**TABLE 7 ASR Supported BA/STY based (60:40) Polymers Produced by Using ASRs comprising STY and varying amounts of MAA in ASRs**

| Trial No | Monomer ratio (60/40) | ASR (% MAA) | Solid theoret ical | Solid (g/L) | pH | Vis. (cps) | Average Particle Size (nm) | Tg (°C) | Free mon. (ppm) |
|---|---|---|---|---|---|---|---|---|---|
| 197 | BA / STY | K(%4) | 41,4 | 41,3 | 9,4 | 100 | 196 | 7.7- 85.2 | 1.5BA/ 0.5STY |
| 182 | BA / STY | L(%5) | 43,2 | 43,2 | 9,6 | 25 | 195 | 9.9- 84.9 | 1.3BA/ 2.5STY |
| 183 | BA / STY | M(%6) | 42,3 | 42,5 | 9,7 | 35 | 165 | 12- 85.8 | 1BA/ 0STY |
| 134 | BA / STY | N(%7) | 43,5 | 43,6 | 9,4 | 60 | 141 | 12- 85.1 | 0.4BA/ 1.3STY |
| 184 | BA / STY | O(%8) | 43,6 | 43,5 | 9,3 | 70 | 254(%50) /70 (%50) | 9.9- 85.4 | 1BA/ 0.6STY |
| | | | | | | | *Ort: 162* | | |
| 185 | BA / STY | P(%10) | 42,7 | 43 | 9,1 | 165 | 363(%40) /48(%60) | 9.8- 87.7 | 2.1BA/ 1.8STY |
| | | | | | | | *Ort: 174* | | |
| 193 | BA / STY | Q(%12) | 42,9 | 42,8 | 9,3 | 200 | 692(%20) /50(%80) | 8.4- 90.8 | 0.6BA/ 0.3STY |
| | | | | | | | *Ort: 178* | | |

According to the present invention, it has been surprisingly found out and as shown that, the particle size distribution of ASR supported polymers having similar monomer composition changes in a similar way based on the amount of methacrylic acid used as the carboxy functional monomer for the production of alkali soluble resin in the first stage. As the methacrylic acid amount used in the first stage for alkali soluble resin production increases, firstly ASR supported polymers having a broad particle size distribution (with larger average particle size) are produced in the second stage and as the increase in methacrylic acid continues, then the second stage starts resulting with polymers having a bimodal particle size distribution. Lastly, as the increase in methacrylic acid continues the particle size distribution of ASR supported polymers reaches a narrow distribution with small particle sizes.

For instance, in an embodiment, BA / MMA based polymers results with a;
large average particle size is obtained when methacrylic acid amount used in the first stage as the carboxylic acid, is between 4 - 4,5% with an average particle size of around 140 nm.
bimodal particle size distribution is obtained when the methacrylic acid amount used in the first stage as the carboxylic acid, is between 4,5-6,0% with an average particle size between 99-140 nm.
narrow particle size distribution with small particle sizes between 50-65 nm is obtained when the methacrylic acid amount used in the first stage as the carboxylic acid, is between 6 - 12 %.

The following tables show the change of average particle sizes with respect to changing acid amounts:

**TABLE 8 Change of Average Particle Size of BA /MMA based Polymers Corresponding to Varying MAA Amounts in ASRs**

| ASR Name | EA (%) | MAA (%) | Average Particle Size (nm) |
|---|---|---|---|
| A | 13.0 | 4.0 | 140 |
| B | 13.0 | 4.5 | 140* |
| C | 13.0 | 5.0 | 114* |
| D | 13.0 | 5.5 | 99* |
| E | 13.0 | 6.0 | 62 |
| F | 13.0 | 7.0 | 60 |
| G | 13.0 | 8.0 | 57 |
| H | 13.0 | 10.0 | 55 |
| I | 13.0 | 12.0 | 50 |

| | | | |
|---|---|---|---|
| *: Bimodal | | | |

**TABLE 9 Change of Average Particle Size of BA/STY based Polymers Corresponding to Varying MAA Amounts in ASRs**

| ASR Name | EA (%) | MAA (%) | Average Particle Size (nm) |
|---|---|---|---|
| A | 13.0 | 4.0 | 585* |
| C | 13.0 | 5.0 | 407* |
| E | 13.0 | 6.0 | 100* |
| F | 13.0 | 7.0 | 96* |
| G | 13.0 | 8.0 | 99* |
| H | 13.0 | 10.0 | 69* |
| I | 13.0 | 12.0 | 48 |

| | | | |
|---|---|---|---|
| *: Bimodal | | | |

The results confirm that as the amount of carboxylic acid, prefarably methacrylic acid (MAA) used in the alkali soluble resin synthesis increases, the ASR supported polymers made by these alkali soluble resins first have a broad particle size distribution. As the amount of carboxylic acid continues to increase the distribution then passes to the bimodal particle size distribution, and finally the particle size distribution becomes narrow with small particle sizes.

Furthermore, ASR supported polymers formed using alkali soluble resins having the same MAA amounts but synthesized by differentiation of the co-monomer in the structure; particle size distribution varies depending on the water solubility of the co-monomer used. For instance monomers such as styrene is less soluble so particles are relatively bigger in comparison for the same amount of carboxylic acid with a different co-monomer. As the water solubility increases; it has been observed that polymers in which the oligomers formed using these monomers are used have broad distributions of particle size first, then bimodal structure, and finally the distribution becomes narrow and small.

According to the present invention, it has been surprisingly found out that in non-surfactant systems where colloidal stability is provided, particle size distributions of ASR supported polymers can be manipulated by varying the amount of acid used in alkali soluble resin preparation based on the water solubility of co-monomer(s) and as a result bimodal particle size distributions may be formed in an alkali soluble resin supported emulsion polymer.

Apart from other advantages of having a bimodal particle size distribution, the method of the present invention can be used in order to produce an alkali soluble resin supported emulsion polymer, having a high solid content with low viscosity.

As it can clearly be seen in the tables, the particle size distribution of ASR supported polymers, produced in the second stage by using alkali soluble resins of the first stage comprising the same amount of MAA but different co-monomer(s), changes depending on the water solubility of the co-monomer(s) used. Depending on the increase of water solubility of the comonomer(s) the average particle size of ASR supported polymers decreases.

The table below shows high solid ASR supported polymers having a low viscosity and a bimodal particle size distribution, produced with F type ASRs:

**TABLE 10 ASR Supported Polymers (BA / STY 60:40)**

| Trial No | Monomer ratio (60/40) | ASR Name | Solid theoret ical | Solid (g/L) | pH | Vis. (cps) | Particle size distribution (nm) | Tg (°C) | Free monome r (ppm) |
|---|---|---|---|---|---|---|---|---|---|
| 191 | BA / STY | F | 43,4 | 43,3 | 9,2 | 50 | 55(%74)/ 212(%26) | 7.0- 80.1 | 0.8BA/ 3.6STY |
| | | | | | | | *Av.: 96* | | |
| 214 | BA / STY | F | 53,2 | 53,1 | 9,3 | 100 | 132(%70)/ 518(%30) | 9.2- 79.8 | 2.8BA/8 .6STY |
| | | | | | | | *Av.: 248* | | |
| 222 | BA / STY | F | 60,2 | 60,0 | 9,3 | 120 | 143(%60) /730(%40) | 9.0- 77.4 | 8BA/ 16STY |
| | | | | | | | *Av.: 378* | | |

The drying test results show that the fastest drying is obtained when styrene monomer is used in at least one of the stages, meaning that in order to obtain a fast drying coating styrene monomer should be preferred in the first stage for preparing the alkali soluble resin or in the second stage for producing the alkali soluble resin supported emulsion polymer or most preferably in both of the stages. In the following table a comparison of a commercial polymer prepared by conventional surfactants and alkali soluble resin supported emulsion polymers, in a paint formulation, can be seen. Opacity, colour and gloss properties are similar for all. Scrub resistance and drying time are consistently better for alkali soluble resin supported emulsion polymers.

**TABLE 11: Comparison of commercial polymer prepared by conventional surfactants and alkali soluble resin supported emulsion polymer in a paint formulation**

| Polymer | Orgal P 838 W | D.133 | D.190 | D.191 |
|---|---|---|---|---|
| Opacity (23°C cured) | 95,76 % | 95,45 % | 95,52 % | 95,17 % |
| Bubbling | No | No | No | No |
| Alkali Resistance (0,5M NaOH/ 2M NaOH / DI Su) | 5/5/5 | 5/5/5 | 5/5/5 | 5/5/5 |
| Gloss (20 / 60 / 85°) 3rd day | 4,6/11/23,2 | 4,6/9,4/23,6 | 4,6/10/21 | 4,8/13,6/23,6 |
| Scrub Resistance ISO g/m^2 | 6,86 | 7,15 | 7,41 | 7,23 |
| L-a-b (Purple pigment) | 51,60/+18,23 / -34,93 | 49,55/+18,14 / -35,55 | 49,85/+18,75 / - 35,71 | 50,31/+ 17,90 /- |
| Drying time (min.) | 26 | 18 | 19 | 34, 82 15 |

The drying time results are measured by a drying time recorder and results are confirmed with FTIR analysis.

## Claims

1. A multistage process for producing an alkali soluble resin supported emulsion polymer wherein the first stage comprises the steps of,
forming a mixture of first stage monomers comprising, from about 1 to 25% by weight of at least one carboxy functional monomer selected from the group comprising acrylic acid, methacrylic acid, crotonic acid, maleic acid, itaconic acid, mesaconic acid, fumaric acid, methylenemalonic acid, citraconic acid or mixtures thereof,
from about 75 to 99% by weight of one or more other ethylenically unsaturated monomers different from the carboxy functional monomer but capable of copolymerizing with the carboxy functional monomer, where percentages are based on the total amount of first stage monomers,
polymerizing said first stage monomer mixture in the presence of a polymerization catalyst, water and a chain transfer agent to form a polymer dispersion having a number average molecular weight lower than 50.000 Dalton,
neutralizing the polymer with a neutralizing agent to a pH value in between the range from 7,0 to 11,0 whereby the polymer dispersion becomes transparent or semitransparent, and the second stage comprises the steps of,
forming a mixture of second stage monomers comprising one or more of ethylenically unsaturated monomers,
polymerizing said second stage monomer mixture in the presence of a polymerization catalyst and the alkali soluble resin produced in the first stage,
wherein the resulting alkali soluble resin supported emulsion polymer has a polymodal particle size distribution.

2. The process of claim 1 wherein the first stage monomer mixture comprises 4 to 12% by weight of methacrylic acid as the carboxy functional monomer.

3. The process of claim 1 or 2 wherein the resulting alkali soluble resin supported emulsion polymer has a bimodal particle size distribution.

4. The process of any of claims 1 to 3 wherein first stage monomer mixture comprises methyl methacrylate, ethyl acrylate, 2-ethylhexyl acrylate, butyl acrylate, styrene or acrylonitrile either individually or as a mixture of 2 or more, as stage 1 co-monomer(s).

5. The process of any of claims 1 to 4 wherein the number average molecular weight of the alkali soluble resin produced in the first stage is between 10,000 to 20,000 Dalton.

6. The process of any of claims 1 to 5 wherein the second stage monomer mixture comprises butyl acrylate, methyl methacrylate or styrene either individually or as a mixture of 2 or more.

7. The process of any of claims 1 to 6 wherein, the second stage monomer mixture comprises up to 5% by weight of carboxy functional monomers, based on the total amount of 2^{nd} stage monomers.

8. The process of any of claims 1 to 7 wherein conventional surfactants are not added in any of the steps of second stage or conventional surfactants are not used in neither first nor the second stage.

9. The process of claim 3 wherein the resulting alkali soluble resin supported emulsion polymer has an average particle size in between 50 to 600 nanometers.

10. An alkali soluble resin supported emulsion polymer obtained by the process of anyone of claims 1 to 6, 8 or 9, wherein the first stage monomer mixture comprises 4 to 6% by weight of carboxy functional monomer with ethyl acrylate and methyl methacrylate together as the co-monomers, the second stage monomer mixture comprises butyl acrylate and methyl methacrylate and wherein the resulting alkali soluble resin supported emulsion polymer has an average particle size between 90 to 140 nanometers and a bimodal particle size distribution comprising 10-20% by volume of larger particles in between 250 to 500 nanometers and 80-90% by volume of smaller particles in between 50 to 250 nanometers.

11. An alkali soluble resin supported emulsion polymer obtained by the process of anyone of claims 1 to 6, 8 or 9, wherein the first stage monomer mixture comprises 4 to 10% by weight of carboxy functional monomer with ethyl acrylate and methyl methacrylate together as the co-monomers, the second stage monomer mixture comprises butyl acrylate and styrene and wherein the resulting alkali soluble resin supported emulsion polymer has an average particle size between 50 to 600 nanometers and a bimodal particle size distribution comprising 10-70% by volume of larger particles in between 150 to 900 nanometers and 30-90% by volume of smaller particles in between 50 to 150 nanometers.

12. An alkali soluble resin supported emulsion polymer obtained by the process of anyone of claims 1 to 6, 8 or 9, wherein the first stage monomer mixture comprises 7 to 12% by weight of carboxy functional monomer with styrene and methyl methacrylate together as the co-monomers, the second stage monomer mixture comprises butyl acrylate and methyl methacrylate and wherein the resulting alkali soluble resin supported emulsion polymer has an average particle size between 50 to 200 nanometers and a bimodal particle size distribution comprising 25-40% by volume of larger particles in between 200 to 400 nanometers and 60-75% by volume of smaller particles in between 30 to 70 nanometers.

13. An alkali soluble resin supported emulsion polymer obtained by the process of anyone of claims 1 to 6, 8 or 9, wherein the first stage monomer mixture comprises 8 to 12% by weight of carboxy functional monomer with styrene and methyl methacrylate together as the co-monomers, the second stage monomer mixture comprises butyl acrylate and styrene and wherein the resulting alkali soluble resin supported emulsion polymer has an average particle size between 150 to 200 nanometers and a bimodal particle size distribution comprising 20-55% by volume of larger particles in between 200 to 700 nanometers and 45-80% by volume of smaller particles in between 30 to 150 nanometers.

14. The alkali soluble resin supported emulsion polymer of claim 11 wherein the emulsion polymer has a high solid content up to 60%.

15. Use of the alkali soluble resin supported emulsion polymer of claim 14 in fast drying compositions such as coatings, paints, textile or ink formulations.

## Patentansprüche

1. Mehrstufiges Verfahren zur Herstellung eines auf alkalilösliches Harz gestützten Emulsionspolymers, wobei die erste Stufe die Schritte umfasst:
Bilden eines Gemisches von Monomeren der ersten Stufe, umfassend etwa 1 bis 25 Gew.-% mindestens eines carboxyfunktionellen Monomers, ausgewählt aus der Gruppe umfassend Acrylsäure, Methacrylsäure, Crotonsäure, Maleinsäure, Itaconsäure, Mesaconsäure, Fumarsäure, Methylenmalonsäure, Citraconsäure oder Gemischen davon,
von etwa 75 bis 99 Gew.-% von einem oder mehreren anderen ethylenisch ungesättigten Monomeren, verschieden von dem carboxyfunktionellen Monomer, aber befähigt, mit dem carboxyfunktionellen Monomer zu copolymerisieren, wobei die Prozentsätze auf der Gesamtmenge der Monomere der ersten Stufe basieren,
Polymerisieren des Monomergemisches der ersten Stufe in Gegenwart eines Polymerisationskatalysators, Wasser und eines Kettenübertragungsmittels unter Bildung einer Polymerdispersion mit einem Zahlenmittel des Molekulargewichts von weniger als 50.000 Dalton,
Neutralisieren des Polymers mit einem Neutralisationsmittel auf einen pH-Wert in dem Bereich von zwischen 7,0 bis 11,0, wodurch die Polymerdispersion transparent oder semitransparent wird, und die zweite Stufe die Schritte umfasst:
Bilden eines Gemisches von Monomeren der zweiten Stufe, umfassend ein oder mehrere ethylenisch ungesättigte Monomere,
Polymerisieren des Monomergemisches der zweiten Stufe in Gegenwart eines Polymerisationskatalysators und des in der ersten Stufe hergestellten alkalilöslichen Harzes,
wobei das resultierende, auf alkalilösliches Harz gestützte Emulsionspolymer eine polymodale Teilchengrößenverteilung aufweist.

2. Verfahren nach Anspruch 1, wobei das Monomergemisch der ersten Stufe 4 bis 12 Gew.-% Methacrylsäure als carboxyfunktionelles Monomer umfasst.

3. Verfahren nach Anspruch 1 oder 2, wobei das resultierende, auf alkalilösliches Harz gestützte Emulsionspolymer eine bimodale Teilchengrößenverteilung aufweist.

4. Verfahren nach einem der Ansprüche 1 bis 3, wobei das Monomergemisch der ersten Stufe Methylmethacrylat, Ethylacrylat, 2-Ethylhexylacrylat, Butylacrylat, Styrol oder Acrylnitril entweder einzeln oder als ein Gemisch von 2 oder mehr als Stufe 1 Co-Monomer(e) umfasst.

5. Verfahren nach einem der Ansprüche 1 bis 4, wobei das Zahlenmittel des Molekulargewichts des in der ersten Stufe hergestellten alkalilöslichen Harzes zwischen 10.000 und 20.000 Dalton liegt.

6. Verfahren nach einem der Ansprüche 1 bis 5, wobei das Monomergemisch der zweiten Stufe Butylacrylat, Methylmethacrylat oder Styrol entweder einzeln oder als Gemisch von 2 oder mehr umfasst.

7. Verfahren nach einem der Ansprüche 1 bis 6, wobei das Monomergemisch der zweiten Stufe bis zu 5 Gew.-% carboxyfunktionelle Monomere, bezogen auf die Gesamtmenge der Monomere der zweiten Stufe, umfasst.

8. Verfahren nach einem der Ansprüche 1 bis 7, wobei herkömmliche Tenside in keinem der Schritte der zweiten Stufe zugesetzt werden oder herkömmliche Tenside weder in der ersten noch in der zweiten Stufe verwendet werden.

9. Verfahren nach Anspruch 3, wobei das resultierende, auf alkalilösliches Harz gestützte Emulsionspolymer eine durchschnittliche Teilchengröße zwischen 50 und 600 Nanometer aufweist.

10. Auf alkalilösliches Harz gestütztes Emulsionspolymer, erhalten durch das Verfahren nach einem der Ansprüche 1 bis 6, 8 oder 9, wobei das Monomergemisch der ersten Stufe 4 bis 6 Gew.-% carboxyfunktionelles Monomer mit Ethylacrylat und Methylmethacrylat zusammen als die Comonomere umfasst, das Monomergemisch der zweiten Stufe Butylacrylat und Methylmethacrylat umfasst, und wobei das resultierende auf alkalilösliches Harz gestützte Emulsionspolymer eine durchschnittliche Teilchengröße zwischen 90 bis 140 Nanometer und eine bimodale Teilchengrößenverteilung, umfassend 10-20 Vol.-% größere Teilchen zwischen 250 und 500 Nanometer und 80-90 Vol.-% kleinere Teilchen zwischen 50 und 250 Nanometer, aufweist.

11. Auf alkalilösliches Harz gestütztes Emulsionspolymer, erhalten durch das Verfahren nach einem der Ansprüche 1 bis 6, 8 oder 9, wobei das Monomergemisch der ersten Stufe 4 bis 10 Gew.-% carboxyfunktionelles Monomer mit Ethylacrylat und Methylmethacrylat zusammen als die Comonomere umfasst, das Monomergemisch der zweiten Stufe Butylacrylat und Styrol umfasst, und wobei das resultierende auf alkalilösliches Harz gestützte Emulsionspolymer eine durchschnittliche Teilchengröße zwischen 50 bis 600 Nanometer und eine bimodale Teilchengrößenverteilung, umfassend 10-70 Vol.-% größere Teilchen zwischen 150 und 900 Nanometer und 30-90 Vol.-% kleinere Teilchen zwischen 50 und 150 Nanometer, aufweist.

12. Auf alkalilösliches Harz gestütztes Emulsionspolymer, erhalten durch das Verfahren nach einem der Ansprüche 1 bis 6, 8 oder 9, wobei das Monomergemisch der ersten Stufe 7 bis 12 Gew.-% carboxyfunktionelles Monomer mit Styrol und Methylmethacrylat zusammen als die Comonomere umfasst, das Monomergemisch der zweiten Stufe Butylacrylat und Methylmethacrylat umfasst, und wobei das resultierende auf alkalilösliches Harz gestützte Emulsionspolymer eine durchschnittliche Teilchengröße zwischen 50 bis 200 Nanometer und eine bimodale Teilchengrößenverteilung, umfassend 25-40 Vol.-% größere Teilchen zwischen 200 und 400 Nanometer und 60-75 Vol.-% kleinere Teilchen zwischen 30 und 70 Nanometer, aufweist.

13. Auf alkalilösliches Harz gestütztes Emulsionspolymer, erhalten durch das Verfahren nach einem der Ansprüche 1 bis 6, 8 oder 9, wobei das Monomergemisch der ersten Stufe 8 bis 12 Gew.-% carboxyfunktionelles Monomer mit Styrol und Methylmethacrylat zusammen als die Comonomere umfasst, das Monomergemisch der zweiten Stufe Butylacrylat und Styrol umfasst, und wobei das resultierende auf alkalilösliches Harz gestützte Emulsionspolymer eine durchschnittliche Teilchengröße zwischen 150 bis 200 Nanometer und eine bimodale Teilchengrößenverteilung, umfassend 20-55 Vol.-% größere Teilchen zwischen 200 und 700 Nanometer und 45-80 Vol.-% kleinere Teilchen zwischen 30 und 150 Nanometer, aufweist.

14. Auf alkalilösliches Harz gestütztes Emulsionspolymer nach Anspruch 11, wobei das Emulsionspolymer einen hohen Feststoffgehalt von bis zu 60% aufweist.

15. Verwendung des auf alkalilösliches Harz gestützten Emulsionspolymers nach Anspruch 14 in schnell trocknenden Zusammensetzungen wie Beschichtungen, Farben, Textil- oder Tintenformulierungen.

## Revendications

1. Procédé à étages multiples pour produire un polymère en émulsion supporté par une résine soluble dans des alcalis, dans lequel le premier étage comprend les étapes consistant à
former un mélange de monomères de premier étage comprenant d'environ 1 à 25 % en poids d'au moins un monomère fonctionnel carboxy sélectionné parmi le groupe comprenant l'acide acrylique, l'acide méthacrylique, l'acide crotonique, l'acide maléique, l'acide itaconique, l'acide mésaconique, l'acide fumarique, l'acide méthylènemalonique, l'acide citraconique ou des mélanges de ceux-ci,
d'environ 75 à 99 % en poids d'un ou plusieurs autres monomères à insaturation éthylénique différents du monomère fonctionnel carboxy mais capables de copolymériser avec le monomère fonctionnel carboxy, où les pourcentages sont basés sur la quantité totale de monomères de premier étage,
polymériser ledit mélange de monomères de premier étage en présence d'un catalyseur de polymérisation, d'eau et d'un agent de transfert de chaîne pour former une dispersion polymère ayant un poids moléculaire moyen en nombre inférieur à 50 000 Dalton,
neutraliser le polymère avec un agent neutralisant à une valeur de pH entre la plage de 7,0 à 11,0, moyennant quoi la dispersion polymère devient transparente ou semi-transparente, et le second étage comprend les étapes consistant à
former un mélange de monomères de second étage comprenant un ou plusieurs de monomères à insaturation éthylénique,
polymériser ledit mélange de monomères de second étage en présence d'un catalyseur de polymérisation et de la résine soluble dans des alcalis produite dans le premier étage,
dans lequel le polymère en émulsion supporté par une résine soluble dans des alcalis résultant a une distribution de taille particulaire polymodale.

2. Procédé selon la revendication 1, dans lequel le mélange de monomères de premier étage comprend 4 à 12 % en poids d'acide méthacrylique en tant que le monomère fonctionnel carboxy.

3. Procédé selon la revendication 1 ou 2, dans lequel le polymère en émulsion supporté par une résine soluble dans des alcalis résultant a une distribution de taille particulaire bimodale.

4. Procédé selon l'une quelconque des revendications 1 à 3, dans lequel le mélange de monomères de premier étage comprend du méthacrylate de méthyle, de l'acrylate d'éthyle, de l'acrylate de 2-éthylhexyle, de l'acrylate de butyle, du styrène ou de l'acrylonitrile soit individuellement, soit en tant que mélange de 2 ou plus, en tant que comonomère(s) d'étage 1.

5. Procédé selon l'une quelconque des revendications 1 à 4, dans lequel le poids moléculaire moyen en nombre de la résine soluble dans des alcalis produite dans le premier étage est compris entre 10 000 et 20 000 Dalton.

6. Procédé selon l'une quelconque des revendications 1 à 5, dans lequel le mélange de monomères de second étage comprend de l'acrylate de butyle, du méthacrylate de méthyle ou du styrène soit individuellement, soit en tant qu'un mélange de 2 ou plus.

7. Procédé selon l'une quelconque des revendications 1 à 6, dans lequel le mélange de monomères de second étage comprend jusqu'à 5 % en poids de monomères fonctionnels carboxy, basés sur la quantité totale de monomères de 2^{nd} étage.

8. Procédé selon l'une quelconque des revendications 1 à 7, dans lequel des tensioactifs conventionnels ne sont pas ajoutés dans l'une quelconque des étapes de second étage ou des tensioactifs conventionnels ne sont pas utilisés dans le premier ou le second étage.

9. Procédé selon la revendication 3, dans lequel le polymère en émulsion supporté par une résine soluble dans des alcalis résultant a une distribution de taille particulaire comprise entre 50 et 600 nanomètres.

10. Polymère en émulsion supporté par une résine soluble dans des alcalis obtenu par le procédé selon l'une quelconque des revendications 1 à 6, 8 ou 9, dans lequel le mélange de monomères de premier étage comprend 4 à 6 % en poids de monomère fonctionnel carboxy avec de l'acrylate d'éthyle et du méthacrylate de méthyle ensemble en tant que les comonomères, le mélange de monomères de second étage comprend de l'acrylate de butyle et du méthacrylate de méthyle, et dans lequel le polymère en émulsion supporté par une résine soluble dans des alcalis résultant a une taille particulaire moyenne comprise entre 90 et 140 nanomètres et une distribution de taille particulaire bimodale comprenant 10 à 20 % en volume de particules assez grandes comprises entre 250 et 500 nanomètres et 80 à 90 % en volume de particules assez petites comprises entre 50 et 250 nanomètres.

11. Polymère en émulsion supporté par une résine soluble dans des alcalis obtenu par le procédé selon l'une quelconque des revendications 1 à 6, 8 ou 9, dans lequel le mélange de monomères de premier étage comprend 4 à 10 % en poids de monomère fonctionnel carboxy avec de l'acrylate d'éthyle et du méthacrylate de méthyle ensemble en tant que les comonomères, le mélange de monomères de second étage comprend de l'acrylate de butyle et du styrène, et dans lequel le polymère en émulsion supporté par une résine soluble dans des alcalis résultant a une taille particulaire moyenne comprise entre 50 et 600 nanomètres et une distribution de taille particulaire bimodale comprenant 10 à 70 % en volume de particules assez grandes comprises entre 150 et 900 nanomètres et 30 à 90 % en volume de particules assez petites comprises entre 50 et 150 nanomètres.

12. Polymère en émulsion supporté par une résine soluble dans des alcalis obtenu par le procédé selon l'une quelconque des revendications 1 à 6, 8 ou 9, dans lequel le mélange de monomères de premier étage comprend 7 à 12 % en poids de monomère fonctionnel carboxy avec du styrène et du méthacrylate de méthyle ensemble en tant que les comonomères, le mélange de monomères de second étage comprend de l'acrylate de butyle et du méthacrylate de méthyle, et dans lequel le polymère en émulsion supporté par une résine soluble dans des alcalis résultant a une taille particulaire moyenne comprise entre 50 et 200 nanomètres et une distribution de taille particulaire bimodale comprenant 25 à 40 % en volume de particules assez grandes comprises entre 200 et 400 nanomètres et 60 à 75 % en volume de particules assez petites comprises entre 30 et 70 nanomètres.

13. Polymère en émulsion supporté par une résine soluble dans des alcalis obtenu par le procédé selon l'une quelconque des revendications 1 à 6, 8 ou 9, dans lequel le mélange de monomères de premier étage comprend 8 à 12 % en poids de monomère fonctionnel carboxy avec du styrène et du méthacrylate de méthyle ensemble en tant que les comonomères, le mélange de monomères de second étage comprend de l'acrylate de butyle et du styrène, et dans lequel le polymère en émulsion supporté par une résine soluble dans des alcalis résultant a une taille particulaire moyenne comprise entre 150 et 200 nanomètres et une distribution de taille particulaire bimodale comprenant 20 à 55 % en volume de particules assez grandes comprises entre 200 et 700 nanomètres et 45 à 80 % en volume de particules assez petites comprises entre 30 et 150 nanomètres.

14. Polymère en émulsion supporté par une résine soluble dans des alcalis selon la revendication 11, dans lequel le polymère en émulsion a une teneur en solides élevée allant jusqu'à 60 %.

15. Utilisation du polymère en émulsion supporté par une résine soluble dans des alcalis selon la revendication 14 dans le séchage rapide de compositions telles que des enrobages, peintures, formulations pour textile ou encre.
